(19) Europäisches Patentamt

European Patent Office

Office européen des brevets

(11) Veröffentlichungsnummer: **0 253 090**
**A2**

## (12) EUROPÄISCHE PATENTANMELDUNG

(21) Anmeldenummer: 87106935.7

(22) Anmeldetag: 13.05.87

(51) Int. Cl.4: **G02B 6/26** , G02B 6/38

(30) Priorität: 12.07.86 DE 3623619

(43) Veröffentlichungstag der Anmeldung:
20.01.88 Patentblatt 88/03

(84) Benannte Vertragsstaaten:
AT CH GB LI SE

(71) Anmelder: **ANT Nachrichtentechnik GmbH**
**Gerberstrasse 33**
**D-7150 Backnang(DE)**

(72) Erfinder: Feilhauer, **Helmut Dipl.-Ing.**
**August Lämmle Strasse 17**
**D-7068 Urach(DE)**
Erfinder: Steimle, **Josef**
**Akazienhain 10**
**D-7151 Allmersbach i.T.(DE)**

(54) Verfahren zum Ausrichten zweier Lichtleitfaserenden auf stirnseitigen Kontakt.

(57) Ein Verfahren zum Ausrichten zweier Lichtleitfaserenden, so daß sie stirnseitig zusammenstoßen und Licht, das in eine der beiden Lichtleitfasern eingespeist wird, mit möglichst geringer Dämpfung in die andere Lichtleitfaser überkoppelt, besteht darin, daß mit einem Manipulator das darin gehaltene Lichtleitfaserende schrittweise in Längsachsenrichtung (z) auf das andere Faserende zugefahren wird, wobei nach jedem Schritt eine Transversalverschiebung des Manipulators erfolgt und dabei die Änderung der überkoppelten Lichtleistung (P) in Abhängigkeit von der Transversalverschiebung registriert wird, und daß die Verschiebung des Manipulators in Längsrichtung gestoppt wird, sobald eine Position ($z_0$) erreicht ist, in der eine Transversalverschiebung des Manipulators keine Änderung der überkoppelten Lichtleistung (P) mehr verursacht (Figur).

Fig. 1

## Verfahren zum Ausrichten zweier Lichtleitfaserenden auf stirnseitigen Kontakt

Die vorliegende Erfindung betrifft ein Verfahren zum Ausrichten zweier Lichtleitfaserenden, so daß sie stirnseitig zusammenstoßen und Licht, das in eine der beiden Lichtleitfasern eingespeist wird, mit möglichst geringer Dämpfung in die andere Lichtleitfaser überkoppelt, wobei ein Lichtleitfaserende mit einem Manipulator in mindestens eine Richtung transversal zu seiner Längsachse verschoben wird bis eine Position gefunden worden ist, in der die von der einen in die andere Lichleitfaser überkoppelte Lichtleistung ein Maximum darstellt.

Ein derartiges Verfahren ist z.B. aus der DE 34 29 862 C1 bekannt. Hier wird das Verfahren während des Verschweißens zweier Lichtleitfaserenden angewendet, um eine möglichst dämpfungsarme Spleißverbindung herzustellen.

Gerade zum Verspleißen von Monomode-Lichtleitfasern ist eine besonders genaue Justage der Faserenden nicht nur in transversaler Richtung, sondern auch bezüglich des stirnseitigen Abstandes erforderlich. Deshalb sollten die Lichtleitfaserenden einerseits transversal so ausgerichtet werden, daß ihre optischen Achsen möglichst zusammenfallen, und andererseits auch in longitudinaler Richtung so justiert werden, daß sie stirnseitig zusammenstoßen.

Der Erfindung liegt nun die Aufgabe zugrunde, ein Verfahren der eingangs genannten Art anzugeben, nach dem auf einfache Weise zwei Lichtleitfaserenden so zueinander ausgerichtet werden, daß zwischen ihnen eine möglichst dämpfungsarme Lichtüberkopplung stattfinden kann.

Erfindungsgemäß wird diese Aufgabe durch die Merkmale des Patentanspruchs 1 gelöst.

Zweckmäßige Ausführungen der Erfindung gehen aus den Unteransprüchen hervor.

Das Verfahren nach der Erfindung hat den Vorteil, daß es automatisch ohne manuellen Eingriff ablaufen kann.

Anhand von aufgezeichneten Meßkurven der aus einer Lichtleitfaser in die andere überkoppelten Lichtleistung wird die Erfindung nachfolgend näher erläutert.

Zwei Lichtleitfaserenden, die beispielsweise in einem Spleißgerät miteinander verschweißt werden sollen, werden zunächst in Halteelementen so festgelegt, daß sie sich stirnseitig einander gegenüberstehen und ihre Längsachsen parallel zueinander verlaufen. Eines der beiden Halteelemente ist als Manipulator ausgebildet, der sich in zwei orthogonalen Richtungen (x-und y-Richtung) transversal zur Längsachse und in longitudinaler Richtung (z-Richtung) parallel zur Längsachse der in dem Manipulator gehaltenen Lichtleitfaser bewegen kann.

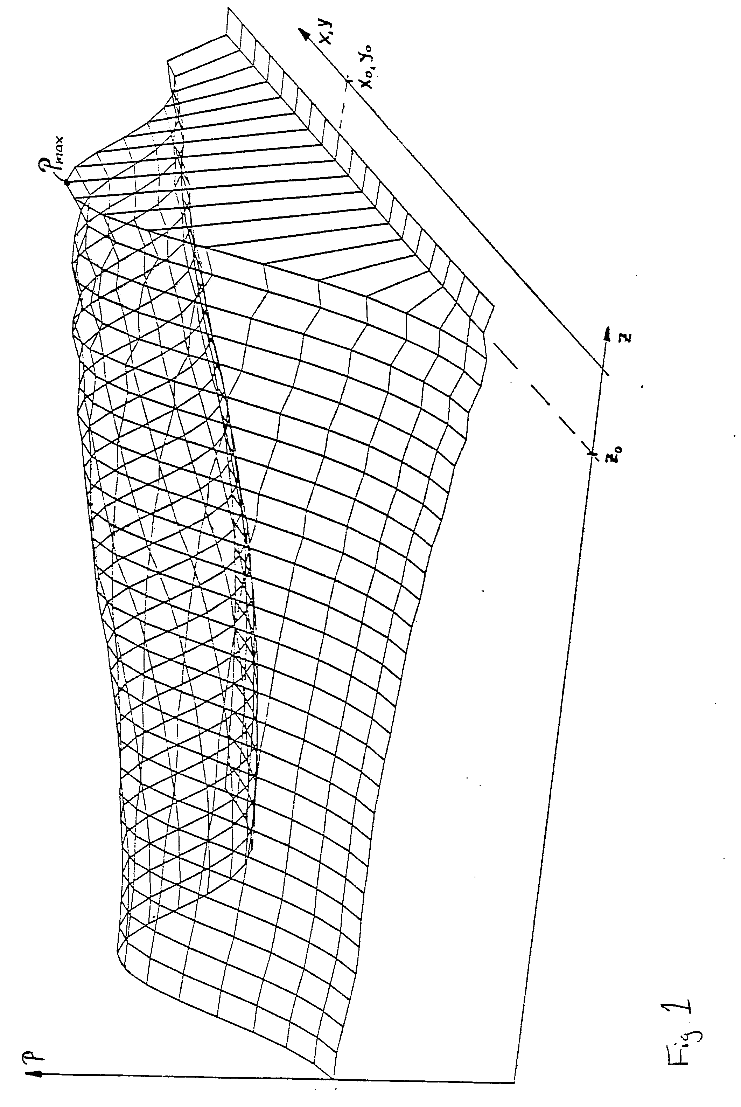

Der Manipulator fährt schrittweise in z-Richtung, also in Richtung der Längsachse der in ihm gehaltenen Lichtleitfaser, auf die Stirnseite der anderen Lichtleitfaser zu. Nach jedem Verschiebeschritt in z-Richtung führt der Manipulator Transversalbewegungen in die zueinander senkrecht orientierten x-und y-Richtungen aus. Dabei ist die Strecke, über die sich der Manipulator transversal verschiebt, kleiner als der Faserdurchmesser. Während jeder Transversalverschiebung wird gemessen, ein wie großer Leistungsanteil von einem in eine Lichtleitfaser eingespeisten Licht über die Trennstelle hinweg in die andere Lichtleitfaser überkoppelt wird. In der Figur ist für jeden Verschiebeschritt in z-Richtung dieser überkoppelte Lichtleistungsanteil P in Abhängigkeit von der Transversalverschiebung in x-bzw. y-Richtung aufgezeichnet. Man erhält dabei senkrecht zur z-Achse, in Richtung der x-bzw. y-Achse verlaufende Meßkurven, die alle ein Maximum aufweisen. Dieses Maximum an überkoppelter Lichtleistung tritt jeweils in einer Position während der Transversalverschiebung auf, wo gerade die optischen Achsen der beiden Lichtleitfasern zusammenfallen.

Die Verschiebung des Manipulators in z-Richtung wird gestoppt, sobald eine Position $z_0$ erreicht ist, in der bei einer Transversalverschiebung des Manipulators keine Änderung der überkoppelten Lichtleistung mehr gemessen wird. In dieser Position stoßen nämlich die beiden Lichtleitfaserenden stirnseitig zusammen und verklemmen sich gegenseitig, so daß bei einer Transversalverschiebung eine Relativbewegung der Stirnseite der einen Faser gegenüber der Stirnseite der anderen Faser nicht mehr stattfinden kann. Man erhält hier in der Position mit der Koordinate $z_0$ einen linearen Verlauf der gemessenen überkoppelten Lichtleistung P. Diese Koordinate $z_0$ wird abgespeichert, denn sie gibt dem Manipulator an, an welcher Stelle in Longitudinalrichtung sich die beiden Lichtleitfasern stirnseitig berühren.

Nachdem die Koordinate $z_0$ ermittelt worden ist, fährt der Manipulator in Längsrichtung um einen Schritt zurück, um die beiden Lichtleitfaserenden in eine berührungsfreie Position zu bringen. Hier wird nun vom Manipulator in jeder der beiden Transversalrichtungen x und y diejenige Position $x_0$, $y_0$ aufgesucht, in der sich eine maximale überkoppelte Lichtleistung $P_{max}$ einstellt. In der gefundenen optimalen $x_0$-, $y_0$-Stellung fährt anschließend der Manipulator wieder bis zu der durch die abgespeicherte Koordinate $z_0$ gegebenen Position vor. Damit ist die Justage der beiden Lichtleitfasern beendet und es kann der Spleißvorgang beginnen.

Der Verfahrensschritt, des Zurückfahrens aus der Position $z_0$, um dann die optimale $x_0$-, $y_0$-Stelle aufzusuchen, kann entfallen, wenn der Manipulator jeweils aus der $x_0$-, $y_0$-Stellung heraus, in der die überkoppelte Lichtleistung P maximal ist, in Längsrichtung vorfährt. Dann befindet sich nämlich der Manipulator, wenn er in die Längsschiebeposition $z_0$ gelangt, schon gleich in der optimalen $x_0$-, $y_0$-Position.

Die Auswertung der gemessenen überkoppelten Lichtleistung in Abhängigkeit von den Transversalverschiebungen, die Abspeicherung der Koordinate $z_0$ und die Steuerung des Manipulators übernimmt vorteilhafterweise ein Mikroprozessor.

## Ansprüche

1. Verfahren zum Ausrichten zweier Lichtleitfaserenden, so daß sie stirnseitig zusammenstoßen und Licht, das in eine der beiden Lichtleitfasern eingespeist wird, mit möglichst geringer Dämpfung in die andere Lichtleitfaser überkoppelt, wobei ein Lichtleitfaserende mit einem Manipulator in mindestens eine Richtung transversal zu seiner Längsachse verschoben wird, bis eine Position gefunden worden ist, in der die von der einen in die andere Lichtleitfaser überkoppelte Lichtleistung ein Maximum darstellt, dadurch gekennzeichnet, daß mit dem Manipulator das darin gehaltene Lichtleitfaserende schrittweise in Längsachsenrichtung (z) auf das andere Faserende zugefahren wird, wobei nach jedem Schritt eine Transversalverschiebung des Manipulators erfolgt und dabei die Änderung der überkoppelten Lichtleistung (P) in Abhängigkeit von der Transversalverschiebung registriert wird, und daß die Verschiebung des Manipulators in Längsrichtung gestoppt wird, sobald eine Position ($z_0$) erreicht ist, in der eine Transversalverschiebung des Manipulators keine Änderung der überkoppelten Lichtleistung (P) mehr verursacht.

2. Verfahren nach Anspruch 1, dadurch gekennzeichnet, daß die Koordinate ($z_0$) derjenigen Position, in der die Längsverschiebung des Manipulators abgebrochen worden ist, gespeichert wird, daß der Manipulator zurückfährt bis sich die beiden Lichtleitfaserenden stirnseitig nicht mehr berühren und dann vom Manipulator diejenige Position ($x_0$, $y_0$) in Transversalrichtung aufgesucht wird, in der die überkoppelte Lichtleistung ($P_{max}$) maximal ist, und daß darauf der Manipulator in die durch die abgespeicherte Koordinate ($z_0$) gegebene Position wieder vorfährt.

3. Verfahren nach Anspruch 1, dadurch gekennzeichnet, daß der Manipulator jeweils aus der Position ($x_0$, $y_0$) heraus, in der in Transversalverschieberichtung ein Maximum der überkoppelten Lichtleistung ($P_{max}$) ermittelt worden ist, einen Verschiebeschritt in Längsrichtung (z) vollzieht.

Fig 1

0 253 090